# EUROPEAN PATENT APPLICATION

(11) **EP 2 319 900 A1**
(43) Date of publication of application: **11.05.2011**
(21) Application number: 09174734.5
(22) Date of filing: 02.11.2009
(51) Int. Cl.: C10G 2/00, C10G 7/00, C10G 11/00, C10G 11/18, C10G 51/02, B01D 53/22, B01J 29/90, B01J 38/14, B01J 38/30

(54) **Cracking process**

(71) Applicant: Shell Internationale Research Maatschappij B.V., 2596 HR The Hague (NL)
(72) Inventor: Harris, John William, 1031 HW Amsterdam (NL); Quevedo Enriquez, Jose Atilio, 1031 HW Amsterdam (NL)

(57) **Abstract**

Process for cracking a paraffinic hydrocarbon feed which process comprises

(a) contacting the feed with cracking catalyst at elevated temperature,
(b) separating the mixture obtained in step (a) to obtain spent catalyst and hydrocarbon product,
(c) contacting the separated catalyst with an oxygen-containing gas to obtain regenerated catalyst, and
(d) using at least part of the regenerated catalyst as cracking catalyst in step (a), in which process the oxygen-contaning gas comprises at most 30 %vol of nitrogen and of from 22 to 32 %vol of oxygen.

## Description

The present invention relates to catalytic cracking of paraffinic hydrocarbon feed.

Catalytic cracking is well known in the art. Feed mainly consisting of paraffinic hydrocarbons is more difficult to process by catalytic cracking because it gives too little coke on the catalyst. It is thought that the main cause for the reduced coke make is the absence of aromatics, sulphur- and/or nitrogen- containing compounds and metal contaminants. As the heat balance of the process requires a substantial amount of coke, a different set-up is to be applied for cracking paraffinic hydrocarbon feeds which mainly consist of hydrogen and carbon.

It has now been found that paraffinic hydrocarbon feeds can be cracked efficiently by relatively minor modification of the existing process. This solution furthermore has the advantage that the work-up section for separating the product into the different fractions, can be simplified.

The process of the present invention relates to a process for cracking a paraffinic hydrocarbon feed which process comprises:
(a) contacting the feed with cracking catalyst at elevated temperature,
(b) separating the mixture obtained in step (a) to obtain spent catalyst and hydrocarbon product,
(c) contacting the spent catalyst obtained in step (b) with an oxygen-containing gas to obtain regenerated catalyst, and
(d) using at least part of the regenerated catalyst as cracking catalyst in step (a), in which process the oxygen-contaning gas comprises at most 30 % by volume (%vol) of nitrogen and of from 22 to 32 %vol of oxygen.

In the set-up according to the present invention, less gas is present in the regenerator which makes it possible to heat the catalyst particles to the temperature required. Further, the process of the present invention requires less process steps due to the absence of contaminants in the feed and the absence of contaminants in the gaseous stream for burning the coke. The absence of nitrogen makes that no cyanide is formed. This makes it no longer necessary to wash the fractions separated from the product. A further advantage is that the present process produces pure carbon dioxide as off-gas which can be used for capture and/or sequestration without requiring further work-up.

The oxygen-containing gas for use in the present invention preferably contains at least 22 %vol of oxygen, based on volume of oxygen on total volume of gas, more specifically at least 23, more specifically at least 24, more specifically at least 25, more specifically at least 26, more specifically at least 27, more specifically at least 28 %vol. To protect the material of the regenerator, the mixture of oxygen-containing gas and recycle gas will generally contain at most 30 %vol of oxygen. Oxygen containing compounds are not considered to be oxygen in the calculation of the volume of oxygen.

The oxygen can be obtained from an air separation unit or any other unit known to be suitable to someone skilled in the art.

The oxygen containing gas contains a substantially reduced amount of nitrogen which means that the amount of nitrogen is at most 30 %vol, based on volume of nitrogen or nitrogen containing compounds on total volume of gas, preferably at most 20 %vol, preferably at most 15 %vol, more specifically at most 10 %vol, more specifically at most 8%vol, more specifically at most 5 %vol, more specifically at most 3%wt, more specifically at most 2 %vol, more specifically at most 1 %vol. Preferably, no nitrogen is present. Preferably, the oxygen containing gas consists of oxygen, carbon dioxide, carbon monoxide and water. It has been found that such gas has relatively high density which allows to reduce the size of the regenerator vessel.

It is especially advantageous if the oxygen-containing gas is prepared in the process according to the present invention as such gas is already free of nitrogen. Therefore, certain recycle streams can be used as oxygen-containing gas such as the off-gas of the regenerator. It is especially advantageous to use this off-gas. Generally, the pressure of the off-gas will have to be increased before it is recycled to the regenerator. Suitably, the oxygen-containing gas for use in the present invention is obtained by injecting oxygen into the flue gas recycle. Alternatively, part or all of the off-gas of the regenerator can further be used in Fischer-Tropsch synthesis.

At least part of the regenerated catalyst is used again as cracking catalyst in step (a).

The paraffinic hydrocarbon feed is preferably prepared by so-called Fischer-Tropsch hydrocarbon synthesis wherein synthesis gas is converted into alkanes with the help of a catalyst. Generally, the product obtained in Fischer-Tropsch synthesis is subsequently cracked and separated by fractional distillation in fractions of various boiling ranges. The paraffinic hydrocarbon feed for use in the present invention comprises at most 5 %wt of contaminants other than hydrogen and carbon, more preferably at most 2 %wt, more preferably at most 1 %wt, more preferably at most 0.1 %wt and most preferably at most 0.01 %wt. Most preferably, the feed consists of hydrogen and carbon. The feed preferably comprises at least 70 %wt of hydrocarbons obtained in a Fischer-Tropsch hydrocarbon synthesis process, preferably at least 90 %wt. The feed preferably boils in the gasoil boiling range or higher, i.e. in the range of from 210 to 750 °C, more preferably above the gas oil boiling range, i.e. of from 350 to 650 °C.

In step (a), the feed is preferably contacted with cracking catalyst at a temperature of from 450 to 650 °C to yield a hydrocarbon product and spent catalyst. This process is preferably carried out in a riser reactor.

The mixture obtained is typically separated in a separator/stripper to separate the spent catalyst from the hydrocarbon product. Preferably, steam is added to the mixture during separation.

Part of the hydrocarbon product obtained in step (b) can be cracked further in order to obtain lower olefins which are desirable starting compounds for many different products. Therefore, the present invention further relates to a process according to the present invention which process further comprises (i) further cracking part of the hydrocarbon product obtained in step (b) with cracking catalyst to obtain product comprising olefins of from 2 to 4 carbon atoms, (j) separating the mixture obtained in step (i) to obtain hydrocarbon product and used catalyst, and (k) using at least part of the used catalyst obtained in step (j) as cracking catalyst in step (a).

The hydrocarbon product subjected to step (i) preferably contains compounds boiling in the range of from 500 to 800 °C, more preferably of from 565 to 750 °C.

As mentioned previously, the lack of contaminants makes it possible to simplify the work-up section. An especially advantageous work-up section has been found to comprise:
(e) separating the hydrocarbon product obtained in step
(b) by fractional distallation into gas, gas oil and residue,
(f) separating the gas obtained in step (e) into a gas containing propane and/or propene and propane-lean liquid, and
(g) separating the propane-lean liquid obtained in step (f)to obtain a gas containing butane and/or butene and butane-lean liquid.

Generally, only a limited amount of gas oil will be separated in step (e).

Preferably, at least part of the hydrocarbon product obtained in step (j) is sent to step (e) together with product of step (b).

The expression "butane-lean" means that the liquid in question contains a limited amount only of butane and butene, and "propane-lean" means that the liquid in question contains a limited amounts only of propane and propene.

In conventional operation, salt is often present during fractional distillation. Salt is easily introduced or formed during conventional operation due to the use of wash water or its presence in feed. As no wash water is required in the present invention while the feed preferably is obtained by Fischer-Tropsch synthesis, there will be no salt present in the process of the present invention. This makes that operation does not to take into account the chance of sublimation of salt. This makes that the fractional distillation can be operated at lower temperatures than usually applied. The temperature at the bottom of the fractionator preferably is of from 210 to 280 °C, more specifically of from 230 to 270 °C, most specifically of from 240 to 260 °C. The pressure applied generally will be of from 1 to 10 bar, more specifically of from 1 to 5 bar.

The separation of step (f) is generally carried out converting the gas into a liquid before separation. The gas can be converted into a liquid by lowering the temperature and/or increasing the pressure. Preferably, the pressure is increased. The pressure in the separation column of step (f) generally is of from 10 to 50 bar, more specifically of from 15 to 30 bar.

The separation of step (g) is generally carried out by decreasing the pressure of the liquid obtained in step (f). The pressure in the separation column of step (g) generally is of from 1 to 20 bar, more specifically of from 5 to 20 bar.

Further, it is preferred to carry out step (e) and/or (f) by divided wall fractional distillation. Such distillation is carried out in a column containing a wall dividing the column in the longitudinal direction to form a first upper region, a second upper region and lower common region. Above the first and second upper regions there can be a common top region if desired.

Due to the lack of contaminants, hydrogen can be separated with the help of a membrane from product obtained in the present process. This is especially easy if the product is gaseous at normal temperature and pressure. The hydrogen obtained can be used again for example in Fischer-Tropsch hydrocarbon synthesis.

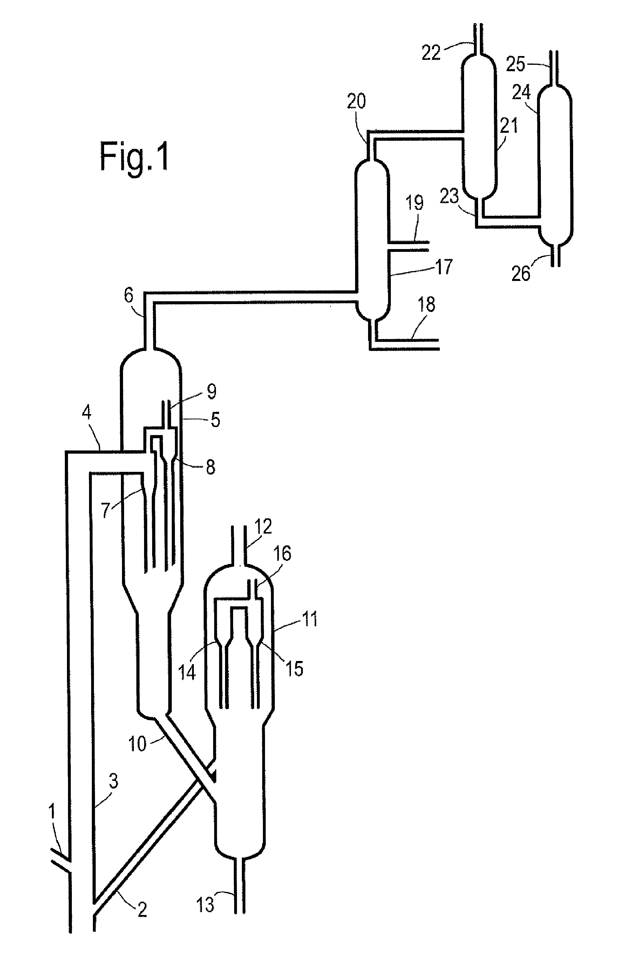

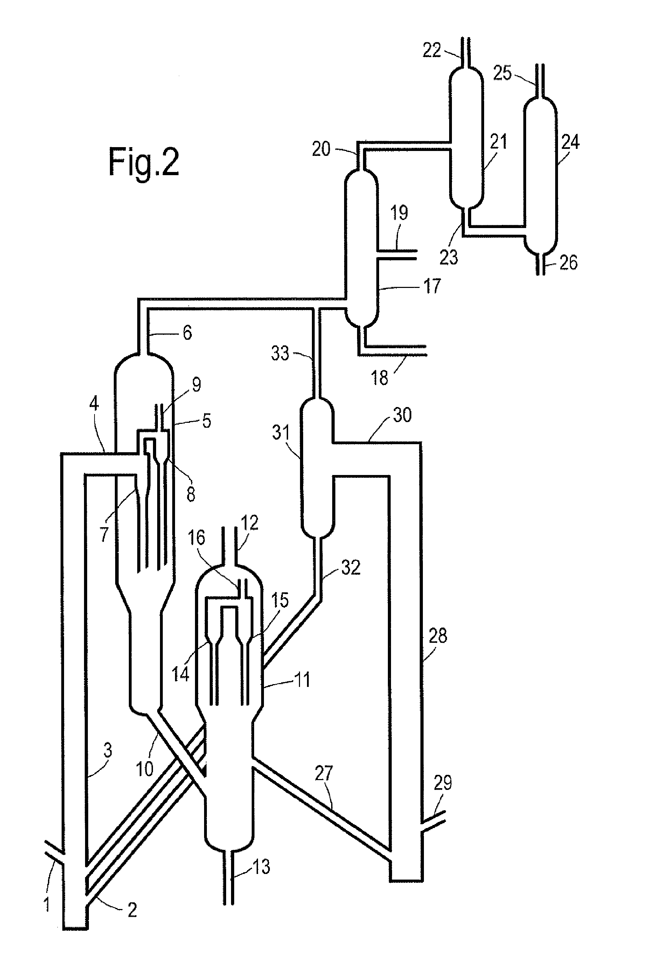

The invention shall be further elucidated by means of the following figures. Figure 1 shows a process flow scheme in which hydrocarbon feed is cracked without further cracking of hydrocarbon product. Figure 2 shows a process flow scheme in which hydrocarbon feed is cracked with part of the product further cracked to obtain olefins of from 2 to 4 carbon atoms. Where the same reference numerals are used in Figures 1 and 2, they refer to the same or similar objects.

In the process of Figure 1, paraffinic hydrocarbon feed is sent to the cracking process via line 1 and regenerated catalyst is added via line 2. The mixture of feed and catalyst flows upwardly through riser reactor 3. Via line 4, the mixture of spent catalyst and hydrocarbon product is sent to stripper/seperator 5. Spent catalyst will generally be separated from hydrocarbon product with the help of a first cyclone 7, after which the gas separated off in the first cyclone 7 can be sent to a second cyclone 8. If desired, the gas separated off in the second cyclone 8 can be sent to a third means for separating solid partices. Catalyst particles which have been separated off, flow via a so-called dipleg to a regeneration zone. The separated catalyst particles flow via line 10 to regenerator 11 where the oxygen-containing gas is added via line 13 and waste gas is removed via line 12. Solids can be removed from the gas flowing upwards with the help of cyclone 14 which feeds into cyclone 15. Gas which is substantially free from solids can further flow upwards via line 16. The catalyst thus regenerated can be used again in riser reactor 3.

The hydrocarbon product separated in stripper/separator 5 is sent via line 6 to the main fractionator 17 where gas is removed via line 20, gas oil is removed via line 19 and slurry oil is removed via line 18. The gas removed via line 20 is increased in pressure to obtain a mixture of gas and liquid which is separated further in column 21 to obtain a gas containing propane and/or propene which is removed via line 22 and a propane-lean liquid which is sent via line 23 to column 24 where the liquid is separated further by reducing the pressure. Gas containing butane and/or butene is removed via line 25 and butane-lean liquid is removed via line 26.

Figure 2 shows an alternative set-up. In this set-up, part of the product obtained in step (b) is sent via line 29 to a further cracking reactor 28. The product obtained is sent via line 30 to catalyst separator 31 to obtain used catalyst which is removed via line 32 and gaseous product removed via line 33. At least part of the used catalyst is sent to riser reactor 3. The gaseous product removed via line 33 is suitably separated into the different desired fractions together with the product of line 6.

## Claims

1. Process for cracking a paraffinic hydrocarbon feed which process comprises:
(a) contacting the feed with cracking catalyst at elevated temperature,
(b) separating the mixture obtained in step (a) to obtain spent catalyst and hydrocarbon product,
(c) contacting the separated catalyst with an oxygen-containing gas to obtain regenerated catalyst, and
(d) using at least part of the regenerated catalyst as cracking catalyst in step (a), in which process the oxygen-contaning gas comprises at most 30 %vol of nitrogen and comprises of from 22 to 32 %wt of oxygen.

2. Process according to claim 1, which process further comprises
(e) separating the hydrocarbon product obtained in step
(b) by fractional distallation into gas, gas oil and residue,
(f) separating the gas obtained in step (e) into a gas containing propane and/or propene and propane-lean liquid, and
(g) separating the propane-lean liquid obtained in step
(f) to obtain a gas containing butane and/or butene and butane-lean liquid.

3. Process according to claim 1 or 2, which process further comprises
(i) further cracking part of the hydrocarbon product obtained in step (b) with cracking catalyst to obtain product comprising olefins of from 2 to 4 carbon atoms,
(j) separating the mixture obtained in step (i) to obtain hydrocarbon product and used catalyst, and
(k) using at least part of the used catalyst obtained in step (j) as cracking catalyst in step (a).

4. Process according to claim 3, in which at least part of the hydrocarbon product obtained in step (j) is sent to step (e) together with product of step (b).

5. Process according to any one of claims 1 to 4, in which hydrogen is separated from product with the help of a membrane.
